# EUROPEAN PATENT SPECIFICATION

(11) **EP 2 834 495 B1**
(45) Date of publication and mention of the grant of the patent: **28.11.2018**
(21) Application number: 13771984.5
(22) Date of filing: 02.04.2013
(51) Int. Cl.: F01D 21/00, F02C 7/36

(54) **GEARED TURBOFAN GAS TURBINE ENGINE WITH RELIABILITY CHECK ON GEAR CONNECTION**
GETRIEBETURBOLÜFTER-GASTURBINENMOTOR MIT ZUVERLÄSSIGKEITSPRÜFUNG AN DER GETRIEBEVERBINDUNG
TURBINE À GAZ À DOUBLE FLUX À ENGRENAGE À VÉRIFICATION DE FIABILITÉ SUR RACCORDEMENT D'ENGRENAGE

(30) Priority: 05.04.2012 US 201213440085
(43) Date of publication of application: 11.02.2015
(73) Proprietor: United Technologies Corporation, Farmington, CT 06032 (US)
(72) Inventor: MCCUNE, Michael E., Colchester, Connecticut 06415 (US); SCHWARZ, Frederick M., Glastonbury, Connecticut 06033 (US)
(74) Representative: Dehns
(86) International application number: PCT/US2013/034878
(87) International publication number: WO 2013/151955

(56) References cited:
- US-A- 5 622 045
- US-A1- 2005 129 498
- US-A1- 2007 043 497
- US-A1- 2007 250 245
- US-A1- 2008 022 653
- US-A1- 2008 273 961
- US-A1- 2008 302 081
- US-A1- 2010 058 735
- US-A1- 2011 041 512
- US-B1- 6 494 046

## Description

### BACKGROUND OF THE INVENTION

This application relates to a gas turbine engine wherein a fan rotor is driven through a geared connection, and wherein safety monitoring is performed to ensure that the geared connection has not failed.

Gas turbine engines are known, and typically include a fan delivering air into a compressor. The air is compressed in the compressor and delivered downstream into a combustion section. The air is mixed with fuel and ignited, and products of this combustion pass downstream over turbine rotors.

There are any number of distinct types of gas turbine engines. Two common types are so-called "two spool" and "three spool."

In a two spool gas turbine engine, there are typically a pair of compressors and a pair of turbines each having singular or multiple stages. A shaft connects a high pressure turbine to a high pressure compressor, and is known as a "high spool." A lower pressure turbine is connected by a shaft to a low pressure compressor and is known as a "low spool." The terms "low" and "high" are relative to each other. Historically, the low spool shaft also drives the fan rotor, all at one speed with the low spool.

Another type of gas turbine engine architecture utilizes a third spool. In such gas turbine engines there is also an intermediate spool. A third turbine drives the fan rotor as the "low spool."

More recently, a gear reduction has been incorporated between the drive shaft of a turbine section and the fan rotor. This feature may be used in two or three spool gas turbine engines.

When a gear reduction is used, a resilient coupling may be provided between the gear train components and the drive shaft and/or the fan shaft. This transmission

path provides any number of potential failure points. Should the transmission fail, the fan may no longer be driven. This could prove undesirable, as the speed of the turbine section driving the fan is typically limited by the torque required to drive the fan. Once the connection fails, the turbine section driving the fan could reach undesirably high speeds.

In some respects this concern is magnified for three spool gas turbine engines compared to two spool gas turbine engines. In a two spool engine, if the gear connection to the fan fails, the low pressure turbine is still driving the low pressure compressor, and thus it typically will not reach speeds as undesirably high as might be the case with the three spool design.

A prior art gas turbine engine, having the features of the preamble of claim 1, is disclosed in US 2010/0058735 A1. A prior art method of operating a gas turbine engine is disclosed in US 2007/0250245 A1. A prior art method of detecting a shaft failure is disclosed in US 6,494,046 B1. A prior art system and method of determining thermal growth of motor engine parts is disclosed in US 2007/0043497 A1. A prior art gas turbine engine system is disclosed in US 2008/0273961 A1.

### SUMMARY OF THE INVENTION

The present invention provides a gas turbine engine as recited in claim 1, and a method as recited in claim 9.

### BRIEF DESCRIPTION OF THE DRAWINGS

Figure 1 schematically shows a first embodiment.
Figure 2 schematically shows a second embodiment.

### DETAILED DESCRIPTION

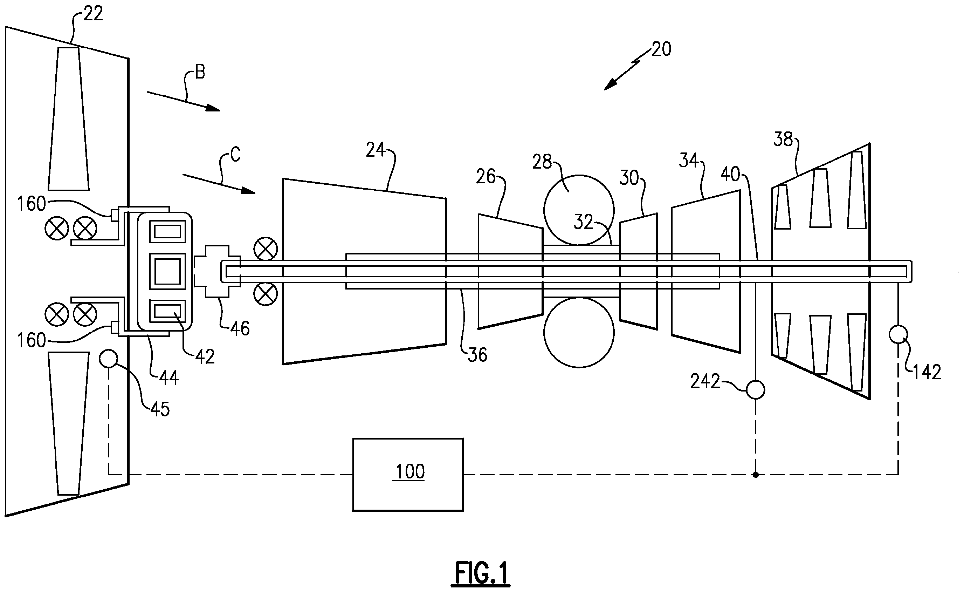

Figure 1 shows a gas turbine engine 20 which has three spools. A fan 22 delivers bypass air B and core airflow C. The core airflow C passes into an intermediate pressure compressor 24. The air compressed by the intermediate pressure compressor 24 passes into a high pressure compressor 26. The air is compressed and delivered across a combustion section 28, where it is ignited. Products of this combustion pass downstream into a high pressure turbine 30. A high spool is defined by the high pressure turbine 30, which drives the shaft 32, which in turn drives the high pressure compressor 26.

The products of combustion pass downstream of the high pressure turbine 30 into an intermediate pressure turbine 34. The intermediate pressure turbine 34 drives a shaft 36, which in turn drives the intermediate pressure compressor 24 as an intermediate spool. From the intermediate pressure turbine 34 the products of combustion pass downstream over a low pressure turbine 38. The low pressure turbine 38 is driven to rotate, and in turn rotates the shaft 40. The shaft 40 drives a gear transmission 42 to rotate the fan 22. The speed reduction mechanism 42 is typically an epicyclic gear reduction unit, so that the fan rotates at a slower speed than the low pressure turbine 38, which is the fan driving turbine. As known, the terms "low," "high," and "intermediate" are relative to each other.

The gear transmission 42 includes gear components, and a coupling and / or a spline connection 46, shown somewhat schematically. This feature 46 may also be a flexible connection allowing for the engine to bend under thrust loads without causing misaligned input to the gearbox. In addition, the gear components 42 typically drive a fan shaft 44 which is connected to drive the fan 22. It will be understood that this figure is quite schematic, and a worker of ordinary skill in the art would recognize the types of flexible couplings, etc., along with the drive connections which may be used between these components.

As mentioned above, should any of the components 42/44/46 fail, then the low pressure turbine 38 might begin to rotate at undesirably high speeds, as it is no longer called upon to drive the fan rotor 22.

As used herein the term 'speed' is construed to mean the time at which an applicable engine component arrives at a particular rotation location, which arrival time may be compared to the time of arrival of another engine component. Similarly, the term 'overspeed' is construed to define the situation in which an applicable engine component arrives at a particular rotation location sooner than it should as compared to the arrival time of another component that is intended to have an arrival time that is historically consistent between the two features. Conversely, the term 'underspeed' is construed to define the situation in which an applicable engine component arrives at a particular rotation location later than it should as compared to the historical arrival time of another component. Also, the "term time of arrival" relates to the relative time of arrival of two features: a reference feature at one end of the spool assembly relative to a feature at or near the other end of the spool and this time of arrival difference can optionally be converted into a difference in the angular dimension of the two features.

More generally, the term "speed" can be taken to be any sort of rotation information with regard to the position of a feature rotating with the fan, and a way of reaching an expected value for that rotation information.

A sensor 45 is positioned adjacent blades of the fan rotor 22 or at the tip of the fan blades tip or at bumps or other features on the shaft 44 driving the fan hub. It should be understood that any type of sensor may be utilized, however, one disclosed sensor senses the time of arrival of an edge of the blades at their tip associated with the fan rotor 22. Such sensors are known, and have been utilized for any number of applications.

The time-of-arrival information from a sensor 45 is delivered to an electronic engine control 100. A second sensor 242 senses the time of arrival of bumps or other features on the shaft 40, and provides the information to the control 100. Again, any other type sensor may replace sensor 242 as long as the sensor and the accompanying control can precisely measure the time of arrival of a bump or other timing feature.

The sensor 242 is shown positioned on the shaft 40, and intermediate the low pressure turbine 38 and the gear connection 42. An alternative position 142 is shown on the opposed side of the shaft 40 from the low pressure turbine 38.

The control 100 takes in time of arrival information of each bump on the shaft individually from the sensor 45 and compares it to time of arrival of individual bumps or other timing features on the rotor from the sensor 242 or 142. The control 100 develops an expected time of arrival based upon the speed sensed by sensors 242/142 and a gear ratio across the speed reduction 42 (any, or all, of wind up produced in the shaft through normal idle, take-off, climb and cruise operation and also the transient wind up caused by power changes accelerations and decelerations may also be utilized).

The control 100 may be programmed to anticipate differences in the arrival time and speed providing for allowable shifts caused by power, ambient temperature, altitude, and creep. The control 100 may also be programmed to compensate for shaft windup due to torque levels, and with possible corrections for transient conditions such as the exertion of power and the time since such an exertion began. In addition, manufacturing tolerances and rotor assembly circumstances may be taken out at an engine's initial run, or after heavy maintenance, and thus are cancelled out or not interpreted as a concern.

The sensors 45, 142 and 242 may be any type of sensor. The locations may be as shown, however, any other location which is able to provide rotation information of the rotor 22, and a location on the opposed side of the gear connection 42 may be utilized.

If the arrival time or other rotation speed information of the fan 22 is significantly in error, then the engine may be shut down as a precaution should the turbine overspeed. If the arrival time of other speed information of the fan rotor 22 progressively becomes more and more different from that which is expected, the engine may be shut down or it may be flagged for inspection or maintenance. This decision may be made based on a rate of deterioration and the extent of the angular difference between the features ahead of and behind the gearbox.

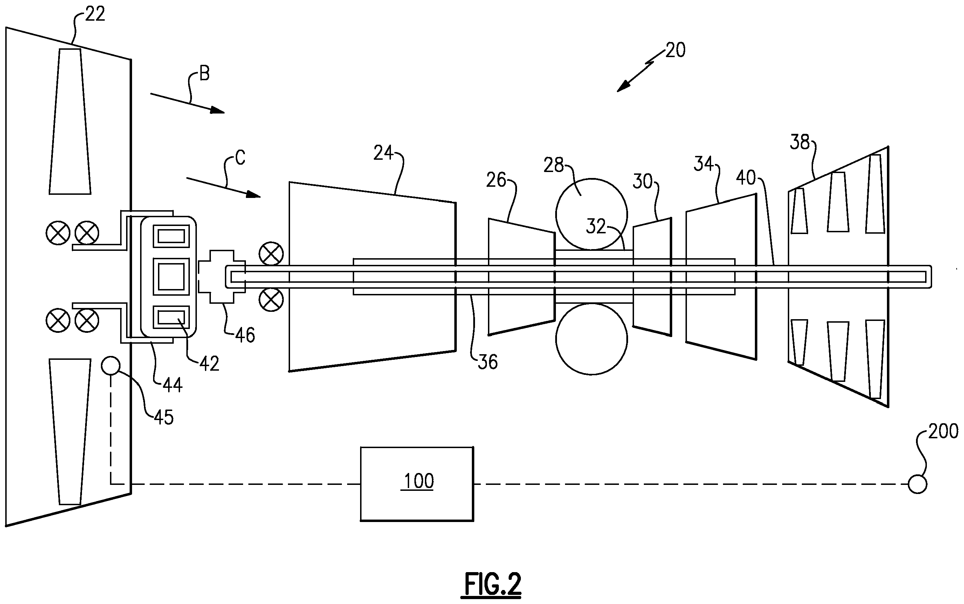

Figure 2 shows an alternative embodiment, wherein a sensor 242 or 142 is not used. Instead, information 200 is utilized, which provides some other variable, which allows an expectation of the time of arrival or other speed to be seen by the sensor 45. As an example, the amount of fuel being delivered into the engine would provide an expected thrust level, and an expected speed of the fan. Any number of other engine related variables can be relied upon to provide this information such as fuel flow, high rotor speed, altitude, flight mach number and/or ambient temperature to provide the basis for calculating air flow and the input energy to the fan drive turbine and ultimately the fan across the gear system. Otherwise, the system will operate as in the first embodiment.

While a three spool design is shown it should be understood that the teachings may extend to a two spool design. In some respects, the teachings can extend to any number of gas turbine engine configurations, including a configuration which has a single compressor stage driven by a turbine stage with a fan drive turbine driving only a fan. Of course, the teachings would also extend to the standard two-spool design wherein the fan drive turbine also drives an intermediate or low stage compressor.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (20) comprising:
a fan (22);
a compressor section (24, 26);
a combustor (28);
a turbine system, including a first turbine (30) including a shaft (40) to drive said compressor (24), and at least a fan drive turbine (38), said fan drive turbine (38) being operable to drive said fan (22) through a speed reduction (42); and
a sensor (45) to sense a speed of rotation of said fan (22) and communicate said sensed speed to a control (100),
**characterised in that**:
said control (100) is configured to develop an expected speed for said fan (22) and identify a problem, caused by failure of the speed reduction, should said sensed speed be less than the expected speed by more than a predetermined amount.

2. The gas turbine engine (20) as set forth in claim 1, wherein said sensor (45) dynamically determines an angular position of a feature rotating with the fan (22) by measuring the time of arrival of the feature, and this dynamically determined angular position is utilized as the sensed speed, and compared to an expected angular position of the fan feature, said expected angular position being said expected speed.

3. The gas turbine engine (20) as set forth in claim 1 or 2, wherein a sensor (45) is associated with said fan drive turbine (38) to sense the angular position of a feature on said fan drive turbine (38), and the sensed angular position of said fan drive turbine (38) feature being utilized to determine said expected speed of said fan (22).

4. The gas turbine engine (20) as set forth in claim 1, 2 or 3, wherein the expected speed of said fan (22) is calculated based upon engine variables.

5. The gas turbine engine (20) as set forth in any preceding claim, wherein:
said engine (20) is shut down should said sensed speed of said fan (22) differ from said expected speed by more than a predetermined amount; and/or
said control (110) looks for progressive increase in the difference between the sensed speed and the expected speed.

6. The gas turbine engine (20) as set forth in any preceding claim, wherein an intermediate turbine (34) is positioned between said first and fan drive turbines (30, 38), and said intermediate turbine (34) drives a compressor stage (24, 26).

7. A gas turbine engine (20) as recited in claim 1, wherein: the compressor section includes at least a first compressor (24) and a second compressor (26) downstream of said first compressor (24):
the shaft (40) of the first turbine (30) drives said second compressor (26):
the turbine system further comprises an intermediate turbine (34) positioned between said first (30) and fan drive turbines (38);
said intermediate turbine (34) drives said first compressor (24); and
the engine further comprises a sensor associated with said fan drive turbine (38) to sense rotation information of said fan drive turbine (38), wherein information relative to said fan drive turbine (38) is utilized to determine said expected information of said fan (22),
said engine (20) is shut down should said sensed information differ from said expected information by more than a predetermined amount, and said sensed rotation information is based upon a time of arrival of a feature that rotates with said fan (22), and said expected speed is developed by sensing a time of arrival of a feature rotating with said fan drive turbine (38) to develop said expected information.

8. The gas turbine engine (20) as set forth in any preceding claim, wherein said speed reduction:
includes at least one of a flexible coupling and a spline connection (46) to drive said fan (22); and/or
directly drives said fan through a fan shaft.

9. A method of operating a gas turbine engine (20) comprising:
a turbine system having a first turbine (30) including a shaft driving a high compressor (26), and at least a fan drive turbine (38) driving a fan (22) through a speed reduction (42); and
sensing a speed of rotation of said fan (22) and comparing a sensed speed to an expected speed for said fan (22),
**characterised by**:
identifying a problem, caused by failure of the speed reduction, should said sensed speed of said fan (22) be less than the expected speed by more than a predetermined amount.

10. The method as set forth in claim 9, wherein said sensed speed of rotation of said fan (22) is sensed by dynamically determining an angular position of a feature rotating with the fan (22) by measuring the time of arrival of the feature, and this dynamically determined angular position being utilized as the sensed speed, and compared to an expected angular position of the fan feature, the expected angular position being said expected speed.

11. The method as set forth in claim 10, wherein sensing the angular position of a feature rotating with said fan drive turbine (38), and said sensed angular position of said feature on said fan drive turbine (38) being utilized to determine said expected angular position of said feature rotating with said fan (22).

12. The method as set forth in claim 10 or 11, wherein the expected speed is calculated based upon engine variables.

13. The method as set forth in any of claims 9 to 12, wherein, if a progressive increase in the difference between the sensed speed and the expected speed is determined, a problem is identified.

14. The method as set forth in any of claims 9 to 13, wherein said fan drive turbine (38) drives said fan (22), and an intermediate turbine (34) is positioned between said first and fan drive turbines (30, 38), and said intermediate turbine (34) drives an intermediate compressor (24).

15. The method as set forth in any of claims 9 to 14, wherein said speed reduction includes at least one of a flexible coupling and a spline connection (46) to drive said fan (22) through said speed reduction (42), and optionally wherein said speed reduction (42) directly drives said fan (22) through a fan shaft (40).

## Patentansprüche

1. Gasturbinenmotor (20), umfassend:
einen Lüfter (22);
einen Verdichterabschnitt (24, 26);
eine Brennkammer (28);
ein Turbinensystem, das eine erste Turbine (30), einschließlich einer Welle (40) zum Antreiben des Verdichters (24), und mindestens eine Lüfterantriebsturbine (38) beinhaltet, wobei die Lüfterantriebsturbine (38) betrieben werden kann, um den Lüfter (22) durch einen Drehzahlverringerungsmechanismus (42) anzutreiben; und
einen Sensor (45) zum Erfassen einer Drehzahl des Lüfters (22) und zum Kommunizieren der erfassten Drehzahl an eine Steuerung (100),
**dadurch gekennzeichnet, dass**:
die Steuerung (100) dazu konfiguriert ist, eine erwartete Drehzahl für den Lüfter (22) zu erarbeiten und ein durch einen Ausfall des Drehzahlverringerungsmechanismus verursachtes Problem festzustellen, sollte die erfasste Drehzahl um mehr als einen vorher festgelegten Betrag geringer sein als die erwartete Drehzahl.

2. Gasturbinenmotor (20) nach Anspruch 1, wobei der Sensor (45) eine Winkelstellung eines sich mit dem Lüfter (22) drehenden Elements dynamisch bestimmt, indem er die Ankunftszeit des Elements misst, und diese dynamisch bestimmte Winkelstellung als die erfasste Drehzahl genutzt und mit einer erwarteten Winkelstellung des Lüfterelements verglichen wird, wobei es sich bei der erwarteten Winkelstellung um die erwartete Drehzahl handelt.

3. Gasturbinenmotor (20) nach Anspruch 1 oder 2, wobei ein Sensor (45) der Lüfterantriebsturbine (38) zugeordnet ist, um die Winkelstellung eines Elements an der Lüfterantriebsturbine (38) zu erfassen, und die erfasste Winkelstellung des Elements der Lüfterantriebsturbine (38) genutzt wird, um die erwartete Drehzahl des Lüfters (22) zu bestimmen.

4. Gasturbinenmotor (20) nach Anspruch 1, 2 oder 3, wobei die erwartete Drehzahl des Lüfters (22) auf Grundlage von Motorvariablen berechnet wird.

5. Gasturbinenmotor (20) nach einem der vorhergehenden Ansprüche, wobei:
der Motor (20) abgestellt wird, sollte die erfasste Drehzahl des Lüfters (22) um mehr als einen vorher festgelegten Betrag von der erwarteten Drehzahl abweichen; und/oder die Steuerung (110) überprüft, ob die Differenz zwischen der erfassten Drehzahl und der erwarteten Drehzahl progressiv zunimmt.

6. Gasturbinenmotor (20) nach einem der vorhergehenden Ansprüche, wobei eine Zwischenturbine (34) zwischen der ersten und der Lüfterantriebsturbine (30, 38) positioniert ist und die Zwischenturbine (34) eine Verdichterstufe (24, 26) antreibt.

7. Gasturbinenmotor (20) nach Anspruch 1, wobei: der Verdichterabschnitt zumindest einen ersten Verdichter (24) und einen zweiten Verdichter (26) stromabwärts des ersten Verdichters (24) beinhaltet;
die Welle (40) der ersten Turbine (30) den zweiten Verdichter (26) antreibt;
das Turbinensystem außerdem eine Zwischenturbine (34) umfasst, die zwischen der ersten (30) und der Lüfterantriebsturbine (38) positioniert ist;
die Zwischenturbine (34) den ersten Verdichter (24) antreibt; und
der Motor außerdem einen Sensor umfasst, welcher der Lüfterantriebsturbine (38) zugeordnet ist, um Drehinformationen der Lüfterantriebsturbine (38) zu erfassen, wobei Informationen bezüglich der Lüfterantriebsturbine (38) genutzt werden, um die erwarteten Informationen des Lüfters (22) zu bestimmen,
der Motor (20) abgestellt wird, sollten die erfassten Informationen um mehr als einen vorher festgelegten Betrag von den erwarteten Informationen abweichen, und die erfassten Drehzahlinformationen auf einer Ankunftszeit eines Elements beruhen, das sich mit dem Lüfter (22) dreht, und die erwartete Drehzahl durch Erfassen einer Ankunftszeit eines sich mit der Lüfterantriebsturbine (38) drehenden Elements erarbeitet wird, um die erwarteten Informationen zu erarbeiten.

8. Gasturbinenmotor (20) nach einem der vorhergehenden Ansprüche, wobei der Drehzahlverringerungsmechanismus:
zumindest entweder eine flexible Kopplung oder eine Keilverbindung (46) zum Antreiben des Lüfters (22) beinhaltet; und/oder
den Lüfter direkt durch eine Lüfterwelle antreibt.

9. Verfahren zum Betreiben eines Gasturbinenmotors (20), umfassend:
ein Turbinensystem, das eine erste Turbine (30), einschließlich einer Welle, die einen Hochdruckverdichter (26) antreibt, und mindestens eine Lüfterantriebswelle (38), die einen Lüfter (22) durch einen Drehzahlverringerungsmechanismus (42) antreibt, aufweist; und
Erfassen einer Drehzahl des Lüfters (22) und Vergleichen einer erfassten Drehzahl mit einer erwarteten Drehzahl des Lüfters (22),
**gekennzeichnet durch**:
Feststellen eines durch einen Ausfall des Drehzahlverringerungsmechanismus verursachten Problems, sollte die erfasste Drehzahl des Lüfters (22) um mehr als einen vorher festgelegten Betrag geringer sein als die erwartete Drehzahl.

10. Verfahren nach Anspruch 9, wobei die erfasste Drehzahl des Lüfters (22) erfasst wird, indem eine Winkelstellung eines sich mit dem Lüfter (22) drehenden Elements durch Messen der Ankunftszeit des Elements dynamisch bestimmt wird, und die dynamisch bestimmte Winkelstellung als die erfasste Drehzahl genutzt und mit einer erwarteten Winkelstellung des Lüfterelements verglichen wird, wobei es sich bei der erwarteten Winkelstellung um die erwartete Drehzahl handelt.

11. Verfahren nach Anspruch 10, wobei die Winkelstellung eines sich mit der Lüfterantriebsturbine (38) drehenden Elements erfasst wird und die erfasste Winkelstellung des Elements an der Lüfterantriebsturbine (38) genutzt wird, um die erwartete Winkelstellung des sich mit dem Lüfter (22) drehenden Elements zu bestimmen.

12. Verfahren nach Anspruch 10 oder 11, wobei die erwartete Drehzahl auf Grundlage von Motorvariablen berechnet wird.

13. Verfahren nach einem der Ansprüche 9 bis 12, wobei, wenn eine progressive Zunahme der Differenz zwischen der erfassten Drehzahl und der erwarteten Drehzahl bestimmt wird, ein Problem festgestellt wird.

14. Verfahren nach einem der Ansprüche 9 bis 13, wobei die Lüfterantriebsturbine (38) den Lüfter (22) antreibt und eine Zwischenturbine (34) zwischen der ersten und der Lüfterantriebsturbine (30, 38) positioniert ist und die Zwischenturbine (34) einen Zwischenverdichter (24) antreibt.

15. Verfahren nach einem der Ansprüche 9 bis 14, wobei der Drehzahlverringerungsmechanismus zumindest entweder eine flexible Kopplung oder eine Keilverbindung (46) zum Antreiben des Lüfters (22) durch den Drehzahlverringerungsmechanismus (42) beinhaltet und wobei optional der Drehzahlverringerungsmechanismus (42) den Lüfter (22) direkt durch eine Lüfterwelle (40) antreibt.

## Revendications

1. Moteur à turbine à gaz (20) comprenant :
un ventilateur (22) ;
une section de compresseur (24, 26) ;
une chambre de combustion (28) ;
un système de turbine, comportant une première turbine (30) comportant un arbre (40) pour entraîner ledit compresseur (24), et au moins une turbine d'entraînement de ventilateur (38), ladite turbine d'entraînement de ventilateur (38) permettant d'entraîner ledit ventilateur (22) par l'intermédiaire d'une réduction de vitesse (42) ; et
un détecteur (45) pour détecter une vitesse de rotation dudit ventilateur (22) et communiquer ladite vitesse détectée à une commande (100),
**caractérisé en ce que** :
ladite commande (100) est configurée pour développer une vitesse attendue pour ledit ventilateur (22) et identifier un problème, causé par une défaillance de la réduction de vitesse, si ladite vitesse détectée est inférieure à la vitesse attendue de plus d'une quantité prédéterminée.

2. Moteur à turbine à gaz (20) selon la revendication 1, dans lequel ledit capteur (45) détermine de manière dynamique une position angulaire d'un élément tournant avec le ventilateur (22) en mesurant le temps d'arrivée de l'élément, et cette position angulaire déterminée de manière dynamique est utilisée en tant que vitesse détectée, et comparée à une position angulaire attendue de l'élément de ventilateur, ladite position angulaire attendue étant ladite vitesse attendue.

3. Moteur à turbine à gaz (20) selon la revendication 1 ou 2, dans lequel un détecteur (45) est associé à ladite turbine d'entraînement de ventilateur (38) pour détecter la position angulaire d'un élément sur ladite turbine d'entraînement de ventilateur (38), et la position angulaire détectée de l'élément de ladite turbine d'entraînement de ventilateur (38) étant utilisée pour déterminer ladite vitesse attendue dudit ventilateur (22).

4. Moteur à turbine à gaz (20) selon la revendication 1, 2 ou 3, dans lequel la vitesse attendue dudit ventilateur (22) est calculée sur la base de variables du moteur.

5. Moteur à turbine à gaz (20) selon une quelconque revendication précédente, dans lequel :
ledit moteur (20) est arrêté si ladite vitesse détectée dudit ventilateur (22) diffère de ladite vitesse attendue de plus d'une quantité prédéterminée ; et/ou
ladite commande (110) recherche une augmentation progressive de la différence entre la vitesse détectée et la vitesse attendue.

6. Moteur à turbine à gaz (20) selon une quelconque revendication précédente, dans lequel une turbine intermédiaire (34) est positionnée entre lesdites première turbine et turbine d'entraînement de ventilateur (30, 38) et ladite turbine intermédiaire (34) entraine un étage de compresseur (24, 26).

7. Moteur à turbine à gaz (20) selon la revendication 1, dans lequel la section de compresseur comporte au moins un premier compresseur (24) et un second compresseur (26) en aval dudit premier compresseur (24) ;
l'arbre (40) de la première turbine (30) entraîne ledit second compresseur (26) ;
le système de turbine comprend en outre une turbine intermédiaire (34) positionnée entre lesdites première turbine (30) et turbine d'entraînement de ventilateur (38) ;
ladite turbine intermédiaire (34) entraîne ledit premier compresseur (24) ; et
le moteur comprend en outre un détecteur associé à ladite turbine d'entraînement de ventilateur (38) pour détecter des informations de rotation de ladite turbine d'entraînement de ventilateur (38), dans lequel les informations relatives à ladite turbine d'entraînement de ventilateur (38) sont utilisées pour déterminer lesdites informations attendues dudit ventilateur (22),
ledit moteur (20) est arrêté si lesdites informations détectées diffèrent desdites informations attendues de plus d'une quantité prédéterminée, et lesdites informations de rotation détectées sont basées sur un temps d'arrivée d'un élément qui tourne avec ledit ventilateur (22), et ladite vitesse attendue est développée en détectant un temps d'arrivée d'un élément tournant avec ladite turbine d'entraînement de ventilateur (38) pour développer lesdites informations attendues.

8. Turbine à gaz (20) selon une quelconque revendication précédente, dans laquelle ladite réduction de vitesse :
comporte au moins l'un d'un raccord flexible et d'un raccord cannelé (46) pour entraîner ledit ventilateur (22) ; et/ou entraîne directement ledit ventilateur par l'intermédiaire d'un arbre de ventilateur.

9. Procédé de fonctionnement d'un moteur à turbine à gaz (20) comprenant :
un système de turbine ayant une première turbine (30) comportant un arbre entraînant un compresseur haute pression (26), et au moins une turbine d'entraînement de ventilateur (38) entraînant un ventilateur (22) par l'intermédiaire d'une réduction de vitesse (42) ; et
la détection d'une vitesse de rotation dudit ventilateur (22) et la comparaison d'une vitesse détectée à une vitesse attendue pour ledit ventilateur (22),
**caractérisé par** :
l'identification d'un problème, causé par une défaillance de la réduction de vitesse, si ladite vitesse détectée dudit ventilateur (22) est inférieure à la vitesse attendue de plus d'une quantité prédéterminée.

10. Procédé selon la revendication 9, dans lequel ladite vitesse de rotation détectée dudit ventilateur (22) est détectée en déterminant de manière dynamique une position angulaire d'un élément tournant avec le ventilateur (22) en mesurant le temps d'arrivée de l'élément, et cette position angulaire déterminée de manière dynamique étant utilisée en tant que vitesse détectée, et comparée à une position angulaire attendue de l'élément de ventilateur, la position angulaire attendue étant ladite vitesse attendue.

11. Procédé selon la revendication 10, dans lequel la position angulaire d'un élément tournant avec ladite turbine d'entraînement de ventilateur (38) est détectée, et ladite position angulaire détectée de l'élément de ladite turbine d'entraînement de ventilateur (38) est utilisée pour déterminer ladite vitesse attendue dudit ventilateur (22).

12. Procédé selon la revendication 10 ou 11, dans lequel la vitesse attendue est calculée sur la base de variables du moteur.

13. Procédé selon l'une quelconque des revendications 9 à 12, dans lequel, si une augmentation progressive de la différence entre la vitesse détectée et la vitesse attendue est déterminée, un problème est identifié.

14. Procédé selon l'une quelconque des revendications 9 à 13, dans lequel ladite turbine d'entraînement de ventilateur (38) entraîne ledit ventilateur (22), et une turbine intermédiaire (34) est positionnée entre lesdites première turbine et turbine d'entraînement de ventilateur (30, 38), et ladite turbine intermédiaire (34) entraine un compresseur intermédiaire (24).

15. Procédé selon l'une quelconque des revendications 9 à 14, dans lequel ladite réduction de vitesse comporte au moins l'un d'un raccord flexible et d'un raccord cannelé (46) pour entraîner ledit ventilateur (22) par l'intermédiaire de ladite réduction de vitesse (42), et éventuellement dans lequel ladite réduction de vitesse (42) entraîne directement ledit ventilateur (22) par l'intermédiaire d'un arbre de ventilateur (40) .
